(19)

Europäisches
Patentamt
European
Patent Office
Office européen
des brevets

(11) **EP 4 521 626 A1**

(12) **EUROPEAN PATENT APPLICATION**

(43) Date of publication:
**12.03.2025 Bulletin 2025/11**

(21) Application number: **23195476.9**

(22) Date of filing: **05.09.2023**

(51) International Patent Classification (IPC):
***H02P 6/16*** (2016.01)   ***H02P 23/14*** (2006.01)

(52) Cooperative Patent Classification (CPC):
**H02P 6/16; H02P 23/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Volvo Truck Corporation**
**405 08 Göteborg (SE)**

(72) Inventor: **NAGARAJ, Chandrasekhar**
**415 63 Göteborg (SE)**

(74) Representative: **Ström & Gulliksson AB**
**P.O. Box 4188**
**203 13 Malmö (SE)**

(54) **SYSTEM AND METHOD FOR AN ELECTRICAL MACHINE**

(57) A computer system (100) is provided, comprising processing circuitry (160, 302) configured to determine (206) at least one electrical machine parameter during operation of an electrical machine (10) based on an assumed resolver (12) offset, to determine (218) a residual (RES) from said at least one measured electrical machine parameter, and to determine (226) if the assumed resolver (12) offset is acceptable by comparing the residual (RES) with a predetermined reference value (T).

**FIG. 1**

EP 4 521 626 A1

**Description**

**TECHNICAL FIELD**

The disclosure relates generally to a system and method for an electrical machine. In particular aspects, the disclosure relates to a system and method for verifying resolver offset calibration for an electrical machine. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Electrical machines are used in a vast amount of applications. By applying position control of the electrical machine a number of benefits are obtained.

Especially in electrical vehicle applications, position control will allow for improved efficiency by enabling precise control of the speed and torque of the electrical machine. Hence, the electrical machine may operate at optimal efficiency for a given speed and load thereby extending the range of the vehicle and improving overall energy efficiency of the electrical vehicle.

Another benefit relates to improved performance and driving experience. Position control of the electrical machine will enable precise control of the position, speed, and torque of the electrical machine thereby allowing for faster acceleration, smoother operation, and better handling.

A further benefit of position control is related to reduction of wear and tear of the electrical machine, thereby prolonging the lifetime as the electrical machine can be driven at optimal efficiency.

Precise control of the moving parts of an electrical machine may be realized by a number of different devices, such as by encoders, Hall effect sensors, linear variable differential transformers, and laser displacement sensors. However, when considering factors such as accuracy, resolution, reliability, immunity to electromagnetic interference, size, and complexity a resolver is normally the first hand choice.

A resolver is a type of sensor that is used to determine the position and speed of a rotating shaft of an electrical machine. A resolver operates by converting the mechanical motion of the shaft into an electrical signal that is indicative of the position and speed of the electrical machine.

A resolver consists of a stator and a rotor. The stator has sets of coils which are typically positioned at specific angles. The rotor is a rotating component that also contains sets of coils, which are positioned around the rotor at specific angles to match the positions of the stator coils. While the stator is a stationary component, the rotor is connected to the rotating shaft of the electrical machine.

When the rotor rotates as the electrical machine is running, voltages will be induced in the stator coils that are proportional to the sine and cosine of the angle between the rotor and stator coils of the resolver. These voltages are then processed to determine the position and speed of the rotating shaft.

As is understood from the above background, correct positioning of the resolver is critical in order to benefit from precise position control.

Insufficient calibration of the resolver position may lead to decreased performance and may jeopardize the control of the electrical machine. Accurate calibration of the resolver, i.e. knowing any present resolver offset and compensating for this resolver offset, is consequently important to assure satisfying performance of the electrical machine, and specifically to assure the desired performance of the electrical vehicle when applicable.

Hence, there is a need for improvements with regards to the resolver calibration of an electrical machine, and especially there is a need for improved methods for determining if the resolver is calibrated accurately.

**SUMMARY**

According to a first aspect of the disclosure, a computer system comprising processing circuitry is provided. The processing circuitry is configured to: determine at least one electrical machine parameter during operation of the electrical machine based on an assumed resolver offset, determine a residual from said at least one measured electrical machine parameter, and determine if the assumed resolver offset is acceptable by comparing the residual with a predetermined reference value. The first aspect may seek to improve performance of the electrical machine. A technical benefit may include providing a simple technique for ensuring that the calibration of the resolver is sufficiently accurate. Typically, the assumed resolver offset is determined as being acceptable if the residual is less than the predetermined reference value. The term "acceptable" is thus to be interpreted as a quality criteria corresponding to a sufficiently good calibration of the resolver, meaning that the resolver will provide accurate signals within an acceptable limit.

Optionally in some examples, including in at least one preferred example, the processing circuitry is further configured to control the electrical machine to run in steady state when determining the at least one electrical machine parameter. A technical benefit may include improved accuracy of the determined residual, as effects caused by transient conditions may be eliminated.

Optionally in some examples, including in at least one preferred example, the processing circuitry is further configured to determine the at least one electrical machine parameter as at least one linear time-invariant parameter. A technical benefit may include improved consistency due to the constant behavior of the at least one electrical machine parameter.

Optionally in some examples, including in at least one preferred example, the processing circuitry is further configured to determine the at least one electrical machine parameter as a d-axis voltage, a stator resistance, a d-axis current, an electrical machine speed, a q-axis inductance, and a q-axis current. A technical benefit may include a more simple algorithm for determining the residual, since these parameters can be made readily available from associated control systems.

Optionally in some examples, including in at least one preferred example, the processing circuitry is further configured to determine the residual as $RES = (U_d - R_s * I_d + \omega * L_q * I_q)/\omega$. A technical benefit may include a more versatile algorithm for determining the residual, in particular by allowing currents to be non-zero.

Optionally in some examples, including in at least one preferred example, the processing circuitry is further configured to determine a moving average of the residual, and to compare the predetermined reference value with the moving average of the residual. A technical benefit may include improved robustness, as a moving average will reduce noise and potential residual anomalies.

Optionally in some examples, including in at least one preferred example, the processing circuitry is further configured to low pass filter the residual to determine a low pass filtered residual, and to compare the predetermined reference value with the low pass filtered residual. A technical benefit may include improved robustness and reliability, as high frequency noise can be disregarded.

Optionally in some examples, including in at least one preferred example, the processing circuitry is further configured to determine the correct resolver offset from the residual. A technical benefit may include improved calibration of the resolver position.

Optionally in some examples, including in at least one preferred example, the processing circuitry is further configured to control the electrical machine to run in steady state when determining the at least one electrical machine parameter, determine the at least one electrical machine parameter as at least one linear time-invariant parameter, determine the residual as $RES = (U_d - R_s * I_d + \omega * L_q * I_q)/\omega$, compare the predetermined reference value with a moving average of the residual, or with a low pass filtered residual, and determine the correct resolver offset from the residual.

According to a second aspect of the disclosure, a vehicle is provided. The vehicle comprises at least one electrical machine, and a computer system according to the first aspect.

Optionally in some examples, including in at least one preferred example, the electrical machine is a permanent magnet machine. A technical benefit may include improved simplicity, as no external components are needed for determining the residual in order to evaluate the resolver calibration.

According to a third aspect of the disclosure, a computer-implemented method is provided. The method comprises determining, by processing circuitry of a computer system, at least one electrical machine parameter during operation of the electrical machine based on an assumed resolver offset, determining, by the processing circuitry, a residual from said at least one measured electrical machine parameter, and determining, by the processing circuitry, if the assumed resolver offset is acceptable by comparing the residual with a predetermined reference value. A technical benefit may include providing a simple technique for ensuring that the calibration of the resolver is sufficiently accurate.

Optionally in some examples, including in at least one preferred example, the method further comprises controlling, by the processing circuitry, the electrical machine to run in steady state when determining the at least one electrical machine parameter. A technical benefit may include improved accuracy of the determined residual, as effects caused by transient conditions may be eliminated.

Optionally in some examples, including in at least one preferred example, the method further comprises determining, by the processing circuitry, the at least one electrical machine parameter as at least one linear time-invariant parameter. A technical benefit may include improved consistency due to the constant behavior of the at least one electrical machine parameter.

Optionally in some examples, including in at least one preferred example, the method further comprises determining, by the processing circuitry, the at least one electrical machine parameter as a d-axis voltage, a stator resistance, a d-axis current, an electrical machine speed, a q-axis inductance, and a q-axis current. A technical benefit may include a more simple algorithm for determining the residual, since these parameters can be made readily available from associated control systems.

Optionally in some examples, including in at least one preferred example, the method further comprises determining, by the processing circuitry, the residual as $RES = (U_d - R_s * I_d + \omega * L_q * I_q)/\omega$. A technical benefit may include a more versatile algorithm for determining the residual, in particular by allowing currents to be non-zero.

Optionally in some examples, including in at least one preferred example, the method further comprises determining, by the processing circuitry, a moving average of the residual, or low pass filter the residual to determine a low pass filtered residual, and comparing, by the processing circuitry, the predetermined reference value with the moving average of the residual or with the low pass filtered residual. A technical benefit may include improved robustness and/or reliability, as high frequency noise can be disregarded.

Optionally in some examples, including in at least one preferred example, the method further comprises determining, by the processing circuitry, the correct resolver offset from the residual. A technical benefit may include improved calibration of the resolver position.

According to a fourth aspect of the disclosure, a computer program product is provided. The computer program product comprises program code for performing, when executed by the processing circuitry, the method according to the third aspect.

According to a fifth aspect, a non-transitory computer-readable storage medium is provided. The non-transitory computer-readable storage medium comprises instructions, which when executed by the processing circuitry, cause the processing circuitry to perform the method according to the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is a side view of a vehicle comprising a computer system according to an example.
FIG. 2 is an exemplary system diagram of a computer system according to an example.
FIG. 3 is another exemplary system diagram of a computer system according to an example.
FIG. 4 is flow chart of an exemplary method to confirm a resolver error according to an example.
FIG. 5 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

Before describing specific details of the technology of this disclosure, some general comments on control of electrical machines will be given.

The dq frame is a mathematical tool used to simplify the analysis and control of electrical machines, such as electric motors or generators.

The dq frame is a coordinate system that rotates with the rotor of the electrical machine, with the d-axis aligned with the magnetic field from the permanent magnets in the rotor, i.e. the magnetization field, and the q-axis 90 degrees ahead of the d-axis. By transforming the three-phase electrical quantities of the machine (i.e. with regards to voltage and current) from the stationary orthogonal frame to the rotating dq frame, it is possible to represent the behavior of the electrical machine as a set of two variables, i.e. the direct-axis (d-axis) and the quadrature-axis (q-axis) components.

The d-axis and the q-axis components may represent any electrical or magnetic quantity (such as current, voltage, or flux) that changes in a three-phase system when the phases are shifted 120 degrees in space and time.

Using the dq frame, it is possible to control the behavior of the electrical machine with regards to speed and torque output by manipulating the d-axis and q-axis components of the voltage and current.

A commonly used way to control electrical machines is called field-oriented control (FOC). FOC involves adjusting the d-axis and q-axis components to control the machine's magnetic field. By adjusting these components in real-time, it is possible to maintain a desired speed or torque output from the machine.

FOC requires the position of the rotor as an input. For this purpose, a resolver may be arranged at the rotor shaft, providing resolver signals indicative of the position of the rotor. Nevertheless, a mechanical resolver offset may exist due to the imbalance of mechanical tolerance during the resolver assembly on the rotor shaft.

In order to minimize errors which may affect the control and efficiency of the electrical machine negatively, calibration of the resolver offset is needed. Calibration is normally performed by analyzing the actual resolver position, and applying corrective measures for compensating for the determined offset. Unless calibrated properly, the resolver offset will cause errors that may lead to an inaccurate determination of the rotor position.

In the following, solutions will be described which effectively determines if the calibration of the resolver offset is within acceptable limits.

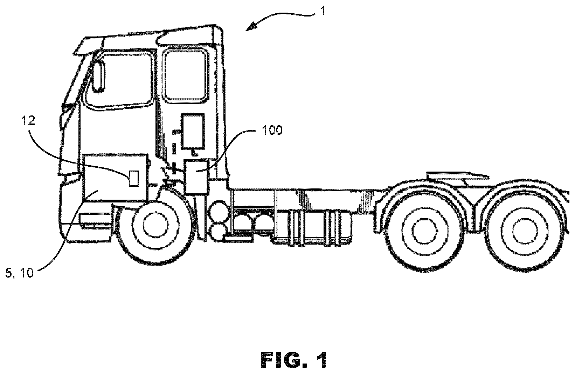

**FIG. 1** is an exemplary system diagram of a vehicle **1** according to an example. The vehicle **1** may be any type of vehicle, such as a heavy duty vehicle or a light duty vehicle. The vehicle **1** comprises an electrical machine arrangement **5**. The electrical machine arrangement **5** comprises an electrical machine **10** being provided with a resolver **12,** and a computer system **100** being configured to determine if a current calibration of the resolver offset of the electrical machine **10** is within acceptable limits, as will be further explained in the following. In **FIG. 1,** the electrical machine arrangement **5** and its included components are shown schematically.

It should be emphasized that the computer system **100** described herein is not exclusively designed to operate with a vehicle **1,** but the computer system **100** may be used in any suitable application, such as moving or stationary applications, embedded or stand-alone applications, etc., as long as it is connected to an electrical machine **10** and forms part of an electrical machine arrangement **5**.

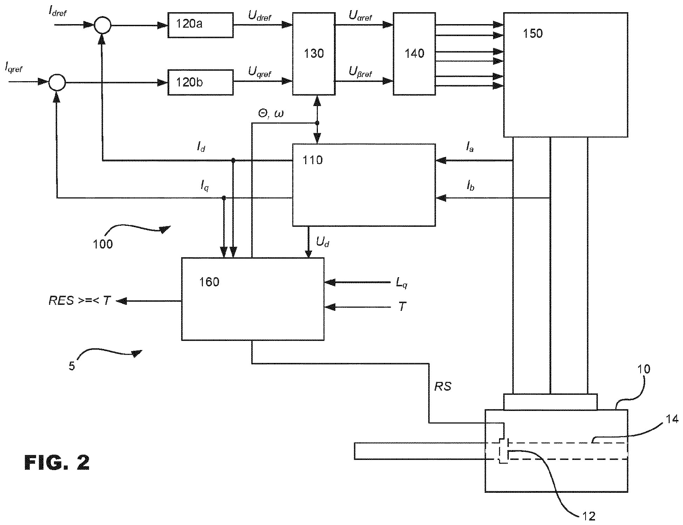

**FIG. 2** is an exemplary system diagram of an electrical machine arrangement **5**. The electrical machine arrangement **5** comprises an electrical machine **10**. The electrical machine **10** is provided with a resolver **12** configured to transmit a resolver signal **RS** being indicative of the current position of a rotor **14** of the electrical machine **10**.

The electrical machine arrangement **5** further comprises a computer system **100**. The computer system **100** is programmed to determine if the calibration of the resolver offset of the resolver **12** is within acceptable limits. The computer system **100** is further configured to allow field-oriented control (FOC) of the electrical machine **10**. The computer system **100** comprises a transformation circuitry **110** configured to measure and transform the motor phase currents to the dq frame, resulting in measured dq frame currents $I_d$ and $I_q$. These transformed currents $I_d$ and $I_q$ are compared to reference currents $I_{dref}$ and $I_{qref}$ (i.e. the flux reference and the torque reference) by regulators **120a, 120b,** outputting reference voltages $U_{dref}$ and $U_{qref}$ in the dq frame. An inverse transformation circuitry **130** is configured to invert the reference voltages $U_{dref}$ and $U_{qref}$ to the voltage components $U_{\alpha ref}$ and $U_{\beta ref}$ of the stator vector voltage in the stationary orthogonal reference frame. These reference voltages are inputs to a space vector pulse-width modulator **140** which is configured to provide drive signals to an inverter **150**.

Each of the transformation circuitry **110** and the inverse transformation circuitry **130** requires the rotor flux position $\theta$, which depends on the position of the rotor. While the rotor flux position can be provided from the signals of the resolver **12,** any built-in error in the resolver **12** will cause control errors which may affect operation of the electrical machine **10** negatively.

For this purpose, the computer system **100** is configured to determine if these built-in errors of the resolver **12** are calibrated properly, according to a general principle which will be further explained in the following.

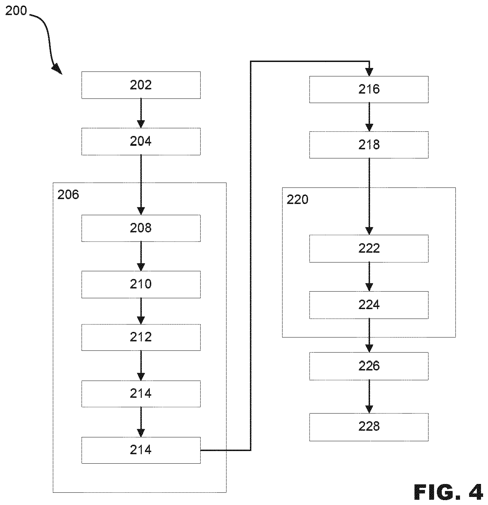

The computer system **100** comprises computing and/or processing circuitry **160** being configured to determine if the resolver offset is calibrated properly according to a method **200** generally described with reference to **FIG. 4**.

It should be noted that the computing circuitry **160,** as well as any processing circuitry programmed to perform the method **200,** could be implemented as embedded software and/or hardware with a computer system **100** configured to control the operation of the electrical machine **10**. However, the computing circuitry **160,** as well as any processing circuitry programmed to perform the method **200,** could in other examples be implemented as a stand-alone application. Hence, evaluating the calibration of the offset of the resolver **12** could be performed as part of the normal operation control of the electrical machine **10,** or for example only once during production, preferably at the end of line of manufacturing.

The general idea is to perform measurements of at least one electrical machine **10** parameter based on an assumed resolver offset, and to determine a residual from said at least one electrical machine **10** parameter. This residual is then compared to a predetermined reference value; if the residual is greater than or equal to the predetermined reference value, calibration of the resolver offset is improper. For example, such conclusion may trigger a request for recalibration. On the other hand, if the residual is less than the predetermined reference value, calibration of the resolver offset is considered to be sufficiently accurate for continued operation of the electrical machine **10**.

Determining the residual is generally based on the assumption that the dq frame, as defined by the computer system **100,** is offset from the actual dq frame in the electrical machine **10,** where the permanent magnet flux is oriented along the d axis, by an angle $\alpha$.

In this case, the d axis voltage of the assumed dq frame can be formulated by the following equation:

$$U_d = R_s * I_d + \omega * \left( \left( L_d - L_q \right) * \alpha * I_d - \left( L_q + L_d * \alpha^2 \right) * I_q + \varphi_m * \alpha \right)$$

The above equation is valid only for small angles $\alpha$, and when the electrical machine **10** is running in steady state. In the above equation, $R_S$ is the stator resistance, $L_d$ and $L_q$ are the d and q axis inductances, $I_d$ and $I_q$ are the d and q axis currents in the control software frame, $\varphi_m$ is the permanent magnet flux and $\omega$ is the electrical speed.

For no offset between the real and assumed dq frames, or for α = 0, the equation reduces to the following equation:

$$U_d = R_s * I_d + \omega * -L_q * I_q$$

If the assumed and actual dq frames were perfectly aligned and if $RES = (U_d - R_s * I_d + \omega * L_q * I_q)/\omega$ is evaluated, theoretically a value of $RES = 0$ should be obtained during steady state operation. The value of $U_d$ can be obtained from the transformation circuitry **110** and the d and q currents are obtained by transforming the three-phase measured currents to the dq frame as previously described. The speed $\omega$ is also available.

However, the same entity $RES$ with a small offset α will not be perfectly 0. It can be calculated to be the following:

$$RES = \left(L_d - L_q\right) * \alpha * I_d - L_d * \alpha^2 * I_q + \varphi_m * \alpha$$

This value is not 0 and based on experiments, a suitable threshold $T$ can be decided for this $U_d$ residual to decide if the offset calibration is good or not.

A moving average or low pass filter may also added to the residual to filter out only the very low frequency component and that in turn is evaluated against a threshold to check if the offset is within acceptable limits.

According to some examples, the residual $RES$ is only used to decide if the resolver offset is calibrated well or not. It does not provide any means to estimate α. However, some advanced estimation algorithms can be adopted to estimate α also, such as an RLS filter or a Kalman filter.

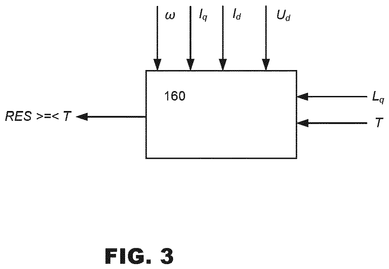

**FIG. 3** schematically shows processing circuitry **160** according to one example. The processing circuitry **160** is configured to determine at least one electrical machine parameter during operation of the electrical machine based on an assumed resolver offset. In the shown example, the at least one electrical machine parameter comprises the q axis inductance $L_q$, the d and q axis currents $I_d$ and $I_q$ of the assumed dq frame, the electrical speed $\omega$, and the d axis voltage $U_d$ of the assumed dq frame.

The processing circuitry **160** is further configured to determine a residual $RES$ from the at least one measured electrical machine parameter, and to determine if the assumed resolver offset is acceptable by comparing the residual $RES$ with a predetermined reference value $T$.

Now turning to **FIG. 4,** a method **200** for determining if a resolver offset is calibrated well or not, will be described. The method **200** operates by an initial control **202** of the electrical machine **10,** which preferably is a permanent magnet motor, to run in steady state.

The method **200** further assumes **204** a specific dq frame, and determines **206** at least one electrical machine parameter during steady state operation of the electrical machine 10.

In the shown example, determining **206** at least one electrical machine parameter comprises determining **208** the q axis inductance $L_q$, determining **210** the d and q axis currents $I_d$ and $I_q$ of the assumed dq frame, determining **212** the electrical speed $\omega$ of the electrical machine **10,** and determining **214** the d axis voltage $U_d$ of the assumed dq frame.

The method **200** further comprises determining **216** a residual $RES$ based on the determined at least one electrical machine parameter. Preferably, the residual $RES$ is determined as $RES = (U_d - R_s * I_d + \omega * L_q * I_q)/\omega$.

The method **200** comprises accessing **218,** e.g. by fetching or receiving, a predetermined reference value $T,$ and comparing **226** the determined residual $RES$ with the predetermined reference value $T$. The predetermined reference value $T$ may act as a threshold for a well-considered calibration, meaning that if the determined residual $RES$ is less than the predetermined reference value $T$, the calibration of the resolver offset is deemed to be sufficient.

Optionally, the method **200** may operate to process **220** the residual $RES$ before comparing it with the predetermined reference value $T$. Such processing **220** may e.g. comprise determining **222** a moving average of the residual $RES$. Processing **220** may also, alone or in combination, comprise filtering **224** the residual $RES$ by applying a low pass filter to the residual $RES$.

Optionally, the method **200** may further operate by determining **228** a correct resolver offset based on the at least one electrical machine parameter.

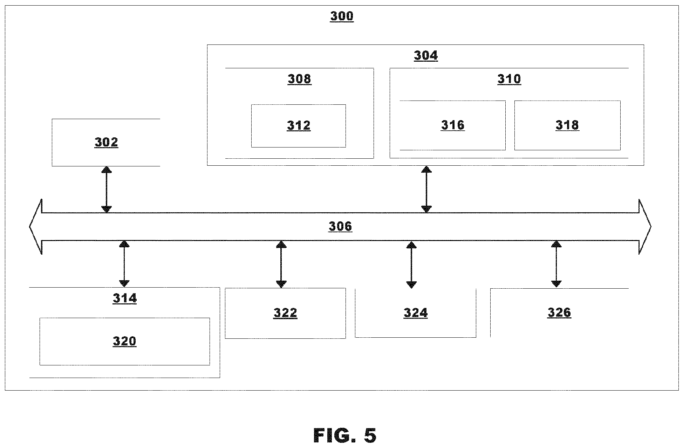

**FIG. 5** is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **302** (e.g., processing circuitry including one or more processor devices or control units), a memory **304,** and a system bus **306.** The computer system **300** may include at least one computing device having the processing circuitry **302.** The system bus **306** provides an interface for system components including, but not limited to, the memory **304** and the processing circuitry **302.** The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302.** A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318.** All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302.** In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302.** The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (**100**) comprising processing circuitry (**160, 302**) configured to determine (**206**) at least one electrical machine parameter during operation of an electrical machine (**10**) based on an assumed resolver (**12**) offset, determine (**218**) a residual (**RES**) from said at least one measured electrical machine parameter, and determine (**226**) if the assumed resolver (**12**) offset is acceptable by comparing the residual (**RES**) with a predetermined reference value (**T**).

Example 2: The computer system (**100**) of Example 1, wherein the processing circuitry (**160, 302**) is further configured to: control (**202**) the electrical machine (**10**) to run in steady state when determining (**206**) the at least one electrical machine parameter.

Example 3: The computer system (**100**) of any of Examples 1-2, wherein the processing circuitry (**160, 302**) is further configured to: determine (**206**) the at least one electrical machine parameter as at least one linear time-invariant parameter.

Example 4: The computer system (**100**) of any of Examples 1-3, wherein the processing circuitry **(160, 302)** is further configured to: determine (**206**) the at least one electrical machine parameter as a d-axis voltage, a stator resistance, a d-axis current, an electrical machine speed, a q-axis inductance, and a q-axis current.

Example 5: The computer system (**100**) of Example 4, wherein the processing circuitry (**160, 302**) is further configured to: determine (**218**) the residual (RES) as $RES = (U_d - R_s * I_d + \omega * L_q * I_q)/\omega$.

Example 6: The computer system (**100**) of any of Examples 1-5, wherein the processing circuitry (**160, 302**) is further configured to: determine (**222**) a moving average of the residual (**RES**), and compare the predetermined reference value (**T**) with the moving average of the residual (**RES**).

Example 7: The computer system (**100**) of any of Examples 1-6, wherein the processing circuitry (**160, 302**) is further configured to: low pass filter (**224**) the residual (**RES**) to determine a low pass filtered residual, and compare the predetermined reference value (**T**) with the low pass filtered residual.

Example 8: The computer system **(100)** of any of Examples 1-7, wherein the processing circuitry (**160, 302**) is further configured to: determine (**228**) a correct resolver offset from the residual (**RES**).

Example 9: The computer system (**100**) of Example 1, wherein the processing circuitry (**160, 302**) is further configured to: control (**202**) the electrical machine (**10**) to run in steady state when determining (**206**) the at least one electrical machine parameter, determine (**206**) the at least one electrical machine parameter as at least one linear time-invariant parameter, determine (**218**) the residual (RES) as $RES = (U_d - R_s * I_d + \omega * L_q * I_q)/\omega$, compare (**226**) the predetermined reference value (**T**) with a moving average of the residual (**RES**), or with a low pass filtered residual (**RES**), and determine (**228**) the correct resolver offset from the residual (**RES**).

Example 10: A vehicle (**1**) comprising the computer system (**100**) of any of Examples 1-9, and at least one electrical machine (**10**).

Example 11: The vehicle (**1**) of Example 10, wherein the electrical machine (**10**) is a permanent magnet machine.

Example 12: A computer-implemented method (**200**), comprising: determining (206), by processing circuitry (**160, 302**) of a computer system (**100**), at least one electrical machine parameter during operation of an electrical machine (**10**) based on an assumed resolver offset, determining (**218**), by the processing circuitry (**160, 302**), a residual (**RES**) from said at least one measured electrical machine parameter, and determining (**226**), by the processing circuitry (**160, 302**), if the assumed resolver offset is acceptable by comparing the residual (**RES**) with a predetermined reference value (**T**).

Example 13: The method of Example 12, further comprising: controlling (**202**), by the processing circuitry (**160, 302**), the electrical machine (**10**) to run in steady state when determining (**206**) the at least one electrical machine parameter.

Example 14: The method of any of Examples 12-13, further comprising: determining (**206**), by the processing circuitry (**160, 302**), the at least one electrical machine parameter as at least one linear time-invariant parameter.

Example 15: The method of any of Examples 12-14, further comprising: determining (**206**), by the processing circuitry (**160, 302**), the at least one electrical machine parameter as a d-axis voltage, a stator resistance, a d-axis current, an electrical machine speed, a q-axis inductance, and a q-axis current.

Example 16: The method of Example 15, further comprising: determining (**218**), by the processing circuitry (**160, 302**), the residual as $RES = (U_d - R_s * I_d + \omega * L_q * I_q)/\omega$.

Example 17: The method of any of Examples 12-16, further comprising: determining (**222**), by the processing circuitry (**160, 302**), a moving average of the residual (**RES**), and/or low pass filter (**224**) the residual (**RES**) to determine a low pass filtered residual, and comparing (**226**), by the processing circuitry (**160, 302**), the predetermined reference value (**T**) with the moving average of the residual (**RES**) or with the low pass filtered residual (**RES**).

Example 18: The method of any of Examples 12-17, further comprising: determining (**228**), by the processing circuitry (**160, 302**), the correct resolver offset from the residual (**RES**).

Example 19: A computer program product comprising program code for performing, when executed by the processing circuitry (**160, 302**), the method (**200**) of any of Examples 12-18.

Example 20: A non-transitory computer-readable storage medium comprising instructions, which when executed by the processing circuitry (**160, 302),** cause the processing circuitry (**160, 302**) to perform the method (**200**) of any of Examples 12-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (**100**) comprising processing circuitry (**160, 302**) configured to:

   determine (**206**) at least one electrical machine parameter during operation of an electrical machine (**10**) based on an assumed resolver (**12**) offset,
   determine (**218**) a residual (**RES**) from said at least one measured electrical machine parameter, and
   determine (**226**) if the assumed resolver (**12**) offset is acceptable by comparing the residual (**RES**) with a predetermined reference value (**T**)**.**

2. The computer system (**100**) of claim 1, wherein the processing circuitry (**160, 302**) is further configured to:
   control (**202**) the electrical machine (**10**) to run in steady state when determining (**206**) the at least one electrical machine parameter.

3. The computer system (**100**) of any of claims 1-2, wherein the processing circuitry (**160, 302**) is further configured to:
   determine (**206**) the at least one electrical machine parameter as at least one linear time-invariant parameter.

4. The computer system (**100**) of any of claims 1-3, wherein the processing circuitry (**160, 302**) is further configured to:
   determine (**206**) the at least one electrical machine parameter as a d-axis voltage, a stator resistance, a d-axis current, an electrical machine speed, a q-axis inductance, and a q-axis current.

5. The computer system (100) of claim 4, wherein the processing circuitry (160, 302) is further configured to: determine (218) the residual (RES) as $RES = (U_d - R_s * I_d + \omega * L_q * I_q)/\omega$.

6. The computer system (100) of any of claims 1-5, wherein the processing circuitry (160, 302) is further configured to:

    determine (222) a moving average of the residual (RES), and
    compare the predetermined reference value (T) with the moving average of the residual (RES).

7. The computer system (100) of any of claims 1-6, wherein the processing circuitry (160, 302) is further configured to:

    low pass filter (224) the residual (RES) to determine a low pass filtered residual, and
    compare the predetermined reference value (T) with the low pass filtered residual.

8. The computer system (100) of any of claims 1-7, wherein the processing circuitry (160, 302) is further configured to: determine (228) a correct resolver offset from the residual (RES).

9. The computer system (100) of claim 1, wherein the processing circuitry (160, 302) is further configured to:

    control (202) the electrical machine (10) to run in steady state when determining (206) the at least one electrical machine parameter,
    determine (206) the at least one electrical machine parameter as at least one linear time-invariant parameter,
    determine (218) the residual (RES) as $RES = (U_d - R_s * I_d + \omega * L_q * I_q)/\omega$,
    compare (226) the predetermined reference value (T) with a moving average of the residual (RES), or with a low pass filtered residual (RES), and
    determine (228) the correct resolver offset from the residual (RES).

10. A vehicle (1) comprising the computer system (100) of any of claims 1-9, and at least one electrical machine (10).

11. The vehicle (1) of claim 10, wherein the electrical machine (10) is a permanent magnet machine.

12. A computer-implemented method (200), comprising:

    determining (206), by processing circuitry (160, 302) of a computer system (100), at least one electrical machine parameter during operation of an electrical machine (10) based on an assumed resolver offset,
    determining (218), by the processing circuitry (160, 302), a residual (RES) from said at least one measured electrical machine parameter, and
    determining (226), by the processing circuitry (160, 302), if the assumed resolver offset is acceptable by comparing the residual (RES) with a predetermined reference value (T).

13. The method of claim 12, further comprising: determining (218), by the processing circuitry (160, 302), the residual as $RES = (U_d - R_s * I_d + \omega * L_q * I_q)/\omega$.

14. A computer program product comprising program code for performing, when executed by the processing circuitry (160, 302), the method (200) of any of claims 12-13.

15. A non-transitory computer-readable storage medium comprising instructions, which when executed by the processing circuitry (160, 302), cause the processing circuitry (160, 302) to perform the method (200) of any of claims 12-13.

**FIG. 1**

**FIG. 2**

**FIG. 3**

200

202

204

206

208

210

212

214

214

216

218

220

222

224

226

228

**FIG. 4**

**FIG. 5**

Europäisches
Patentamt

European
Patent Office

Office européen
des brevets

# EUROPEAN SEARCH REPORT

Application Number

EP 23 19 5476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/076920 A1 (ATIEVA INC [US]) 4 May 2023 (2023-05-04) * paragraph [0029] * * equation 2; paragraph [0034] – paragraph [0037]; figure 1 * * paragraph [0003] * ----- | 1-15 | INV. H02P6/16 H02P23/14 |
| A | EP 3 503 378 B1 (VALEO SIEMENS EAUTOMOTIVE GERMANY GMBH [DE]) 17 February 2021 (2021-02-17) * paragraph [0035] – paragraph [0056]; figures 3,4 * ----- | 1-15 | |

TECHNICAL FIELDS
SEARCHED (IPC)

H02P
B60L

The present search report has been drawn up for all claims

| Place of search | Date of completion of the search | Examiner |
|---|---|---|
| Munich | 7 February 2024 | Schürle, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 5476**

This annex lists the patent family members relating to the patent documents cited in the above-mentioned European search report.
The members are as contained in the European Patent Office EDP file on
The European Patent Office is in no way liable for these particulars which are merely given for the purpose of information.

**07-02-2024**

| Patent document cited in search report | Publication date | Patent family member(s) | Publication date |
|---|---|---|---|
| WO 2023076920 A1 | 04-05-2023 | NONE | |
| EP 3503378 B1 | 17-02-2021 | EP 3503378 A1 | 26-06-2019 |
| | | HU E054121 T2 | 30-08-2021 |
| | | WO 2019121919 A1 | 27-06-2019 |

EPO FORM P0459

For more details about this annex : see Official Journal of the European Patent Office, No. 12/82